# EUROPEAN PATENT APPLICATION

(11) **EP 4 787 110 A1**
(43) Date of publication of application: **05.08.2026**
(21) Application number: 24888571.7
(22) Date of filing: 25.10.2024
(51) Int. Cl.: G05D 1/43, B25J 5/00, B25J 13/00

(54) **ROBOT, AUTONOMOUS ROBOT SYSTEM, GUIDANCE METHOD, CONTROL METHOD, AND PROGRAM**

(30) Priority: 09.11.2023 JP 2023191569
(71) Applicant: Mitsubishi Heavy Industries, Ltd., Chiyoda-ku Tokyo 100-8332 (JP)
(72) Inventor: ISHIDA, Makoto, Tokyo 100-8332 (JP)
(74) Representative: Studio Torta S.p.A.
(86) International application number: PCT/JP2024/038202
(87) International publication number: WO 2025/100274

(57) **Abstract**

A robot is mounted on a cart configured to autonomously travel and includes an arm of which the position and the orientation of a tip are arbitrarily changeable, a vision sensor attached to the tip of the arm, a detection unit configured to detect the amount of deviation of the cart relative to a designated path, based on a marker included in an image captured by the vision sensor, and a travel instruction unit configured to instruct the cart to correct a traveling position or a traveling orientation of the cart, based on the amount of deviation.

## Description

### TECHNICAL FIELD

The present disclosure relates to a robot, an autonomous robot system, a guidance method, a control method, and a program. Priority is claimed on Japanese Patent Application No. 2023-191569, filed November 9, 2023, the content of which is incorporated herein by reference.

### BACKGROUND ART

It is conceivable to mount a robot on an unmanned transport vehicle (automated guided vehicle (AGV)) and automatically transport the robot to a work position (for example, see Patent Document 1).

### Citation List

### Patent Document

Patent Document 1: Japanese Patent No. 2680298

### SUMMARY OF INVENTION

### Technical Problem

The AGV on which the robot is mounted autonomously travels by a guidance method such as a magnetic guidance method or an optical guidance method. In general, commercially available AGVs in the related art are equipped with dedicated sensors and various functions for autonomous travel control in accordance with the guidance method, and are highly functional and expensive. Therefore, for example, in a case where a commercially available AGV is introduced into a factory, the AGV may include functions that are not used in the factory (for example, scheduling of automatic transport, and map creation function), and the equipment configuration and cost may be excessive for the application. In addition, the commercially available AGV is assumed to be operated in an environment in which a traveling floor is flat and can travel stably, and in an environment in which the traveling floor has unevenness, there is a possibility that it is difficult to travel on a correct path.

In addition, when the AVG cannot precisely move to a correct work position, a relative position between the robot and a workpiece is misaligned, and it is difficult for the robot to move a tool to a correct work point on the workpiece to perform the work. Then, the accuracy of the work by the robot is lowered.

An object of the present disclosure is to provide a robot, an autonomous robot system, a guidance method, a control method, and a program that, by causing a robot mounted on a cart to perform guidance, can configure the cart with minimal equipment and cost while causing the cart to travel accurately along a path.

### Solution to Problem

An aspect of the present disclosure relates to a robot mounted on a cart configured to autonomously travel, the robot including: an arm of which the position and the orientation of a tip are arbitrarily changeable; a vision sensor attached to the tip of the arm; a detection unit configured to detect the amount of deviation of the cart relative to a designated path, based on a marker included in an image captured by the vision sensor; and a travel instruction unit configured to instruct the cart to correct a traveling position or a traveling orientation of the cart, based on the amount of deviation.

Another aspect of the present disclosure relates to a robot configured to automatically perform predetermined work on a workpiece, the robot including: an arm of which the position and the orientation of a tip are arbitrarily changeable; a vision sensor attached to the tip of the arm; a tool attached to the tip of the arm; a vision correction unit configured to correct a user coordinate system of the workpiece in accordance with an actual position and orientation of the workpiece, based on an image captured by the vision sensor; and an arm control unit configured to control the position and the orientation of the arm such that a center point of the tool attached to the tip of the arm moves to a work point in the corrected user coordinate system.

Still another aspect of the present disclosure relates to an autonomous robot system including: a cart; and the robot described above, in which the travel instruction unit of the robot is configured to provide the cart with an instruction for autonomous traveling, when the marker is not included in the image, and the cart includes a travel assistance sensor configured to detect the movement amount and a traveling direction, and a travel control device configured to cause the cart to autonomously travel based on the movement amount and the traveling direction detected by the travel assistance sensor, when the instruction for the autonomous traveling is received.

Still another aspect of the present disclosure relates to a guidance method of a cart configured to autonomously travel, using a robot mounted on the cart and including an arm of which the position and the orientation of a tip are arbitrarily changeable, and a vision sensor attached to the tip of the arm, the guidance method including: a step of detecting the amount of deviation of the cart relative to a designated path, based on a marker included in an image captured by the vision sensor; and a step of instructing the cart to correct a traveling position or a traveling orientation of the cart, based on the amount of deviation.

Still another aspect of the present disclosure relates to a program causing a robot mounted on a cart configured to autonomously travel, and including an arm of which the position and the orientation of a tip are arbitrarily changeable, and a vision sensor attached to the tip of the arm, to execute: a step of detecting the amount of deviation of the cart relative to a designated path, based on a marker included in an image captured by the vision sensor attached to the tip of the arm of the robot; and a step of instructing the cart to correct a traveling position or a traveling orientation of the cart, based on the amount of deviation.

Still another aspect of the present disclosure relates to a control method of a robot including an arm of which the position and the orientation of a tip are arbitrarily changeable, and a vision sensor and a tool attached to the tip of the arm and configured to perform predetermined work on a workpiece, the control method including: a step of correcting a user coordinate system of the workpiece in accordance with an actual position and orientation of the workpiece, based on an image captured by the vision sensor; and a step of controlling the position and the orientation of the arm such that a center point of the tool moves to a work point in the corrected user coordinate system.

Still another aspect of the present disclosure relates to a program causing a robot including an arm of which the position and the orientation of a tip are arbitrarily changeable, and a vision sensor and a tool attached to the tip of the arm and configured to perform predetermined work on a workpiece, to execute: a step of correcting a user coordinate system of the workpiece in accordance with an actual position and orientation of the workpiece, based on an image captured by the vision sensor attached to the tip of the arm of the robot; and a step of controlling the position and the orientation of the arm such that a center point of the tool attached to the tip of the arm moves to a work point in the corrected user coordinate system.

### Advantageous Effects of Invention

According to the above aspects, by causing the robot mounted on the cart to perform the guidance, the cart can be configured with minimal equipment and cost while being able to travel accurately along the path.

Further, according to the above aspects, even when the robot slightly deviates from the work position, the tool can be accurately moved to the work point on the workpiece to perform the work.

### BRIEF DESCRIPTION OF DRAWINGS

[FIG. 1] A diagram showing the overall configuration of an autonomous robot system according to a first embodiment.
[FIG. 2] A block diagram showing a functional configuration of a robot control device and a travel control device according to the first embodiment.
[FIG. 3] A flowchart showing an example of a guidance process of a cart by a robot according to the first embodiment.
[FIG. 4] A diagram showing an example of path information according to the first embodiment.
[FIG. 5] A diagram showing the guidance process of the robot according to the first embodiment.
[FIG. 6] A flowchart showing an example of a travel control process of the cart according to the first embodiment.
[FIG. 7] A diagram showing a guidance process of a robot according to Modification Example 1 of the first embodiment.
[FIG. 8] A block diagram showing a functional configuration of a robot control device according to a second embodiment.
[FIG. 9] A flowchart showing an example of a vision correction process of a robot according to the second embodiment.
[FIG. 10] A first diagram showing the vision correction process of the robot according to the second embodiment.
[FIG. 11] A second diagram showing the vision correction process of the robot according to the second embodiment.
[FIG. 12] A third diagram showing the vision correction process of the robot according to the second embodiment.
[FIG. 13] A fourth diagram showing the vision correction process of the robot according to the second embodiment.
[FIG. 14] A fifth diagram showing the vision correction process of the robot according to the second embodiment.
[FIG. 15] A diagram showing an example of a hardware configuration of the robot control device and the travel control device.

### DESCRIPTION OF EMBODIMENTS

### <First Embodiment>

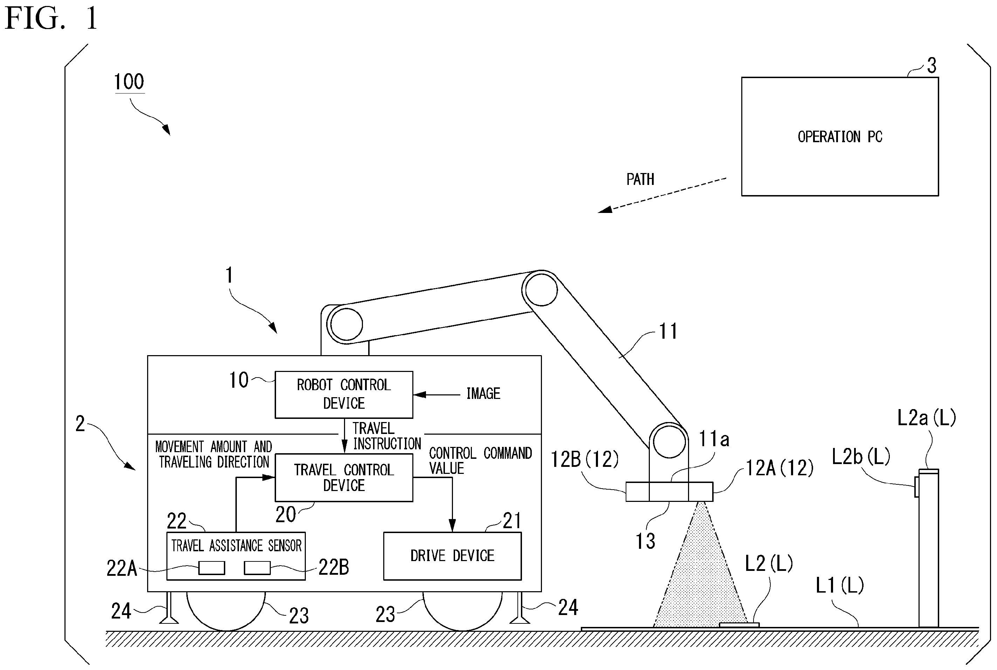

Hereinafter, embodiments will be described in detail with reference to FIGS. 1 to 6.

### (Overall Configuration)

FIG. 1 is a diagram showing the overall configuration of an autonomous robot system according to a first embodiment. An autonomous robot system 100 includes a robot 1, a cart 2, and an operation PC 3.

The robot 1 automatically performs work instructed by an operator in a work space, such as a factory or a warehouse. The robot 1 includes a robot control device 10, an arm 11, a vision sensor 12, and a tool 13.

The robot control device 10 controls an operation of each section of the robot 1. In the present embodiment, the robot control device 10 guides the cart 2 to a designated position. The designated position is, for example, a work position at which the robot 1 performs the work, a storage position of the robot 1 and the cart 2, or the like. The designated position is designated by the operator of the robot 1 via the operation PC 3 described below.

The arm 11 is an articulated robot arm having a plurality of joints. The arm 11 can arbitrarily change the position and the orientation of a tip 11a thereof by rotating each joint.

The vision sensor 12 is attached to the tip 11a of the arm 11. The vision sensor 12 is a camera that images the surroundings of the robot 1. FIG. 1 shows an example in which the vision sensor 12 includes a CCD camera 12A and a 3D camera 12B.

The tool 13 is attachably and detachably attached to the tip 11a of the arm 11. The tool 13 is an implement for performing various types of work. The types of work performed by the robot 1 include, for example, welding; assembly work such as screw tightening and drilling; pick operations such as gripping and moving components; finishing; ultrasonic inspection; and visual inspection. A tool 13 corresponding to the operation is attached to the tip 11a of the arm 11.

The cart 2 is, for example, an unmanned transport vehicle (AGV). The cart 2 includes a travel control device 20, a drive device 21, a travel assistance sensor 22, wheels 23, and a stopper 24.

The travel control device 20 controls the drive device 21 such that the cart 2 moves (travels), stops, changes speed, or the like in accordance with the guidance provided by the robot 1.

The drive device 21 is a travel motor that operates the wheels 23 of the cart 2. In the present embodiment, the wheels 23 are Mecanum wheels (registered trademark) each having a plurality of rollers, and the drive device 21 includes one travel motor for each wheel 23. The drive device 21 changes a combination of the wheels 23 to be rotated or the rotation speed and the rotation direction of each wheel 23 in accordance with a control command of the travel control device 20. Therefore, the cart 2 can move in any direction. In other embodiments, the wheels 23 may be general wheels instead of the Mecanum wheels. In this case, the drive device 21 includes a travel motor that rotates the wheels and a steering mechanism that changes a direction of a wheel shaft.

The travel assistance sensor 22 is a sensor for detecting the position or the traveling direction of the cart 2 such that the cart 2 can autonomously travel when there is no guidance provided by the robot 1. In the present embodiment, the travel assistance sensor 22 includes a position detection sensor 22A that detects the movement amount of the cart 2 in a horizontal direction (X-axis direction and Y-axis direction). The position detection sensor 22A is a sensor that uses the same technology as a so-called optical mouse, and reads a pattern on a floor surface or the like to detect the movement amount of the cart 2 in the X-axis direction and the Y-axis direction. The travel assistance sensor 22 may further include a gyrocompass 22B that detects the traveling direction of the cart 2.

The stopper 24 is an implement for fixing the cart 2 such that the cart 2 does not move after the cart 2 is moved to the designated position.

The operation PC 3 is a computer operated by the operator of the robot 1. The operation PC 3 performs wireless communication with the robot 1. The operation PC 3 receives an operation of the operator and provides the robot 1 with an instruction for the designated position that is a destination and a path (waypoint or the like) to the designated position.

### (Functional Configuration of Robot Control Device)

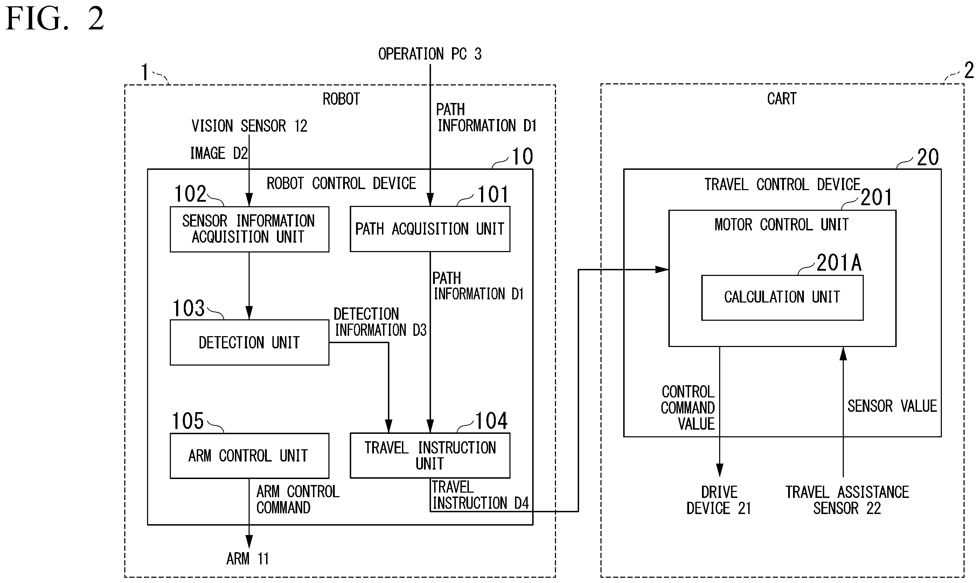

FIG. 2 is a block diagram showing a functional configuration of a robot control device and a travel control device according to the first embodiment. As shown in FIG. 2, the robot control device 10 includes a path acquisition unit 101, a sensor information acquisition unit 102, a detection unit 103, a travel instruction unit 104, and an arm control unit 105.

The path acquisition unit 101 acquires, from the operation PC 3, path information D1 indicating a path from the current position of the cart 2 to the designated position.

The sensor information acquisition unit 102 acquires an image D2 captured by the vision sensor 12. In the present embodiment, for example, the sensor information acquisition unit 102 acquires the image D2 captured by the CCD camera 12A of the vision sensor 12 when the cart 2 is moved.

The detection unit 103 detects the amount of deviation of the traveling position or the traveling direction (angle) of the cart 2 with respect to the designated path based on a marker L included in the image captured by the vision sensor 12 (CCD camera 12A). The marker L is, for example, a guide line L1 drawn on a floor surface or a two-dimensional code such as a QR code L2 (registered trademark). The marker L is attached to the travel path of the cart 2, a stop position of the cart 2 in the work area, or the like. In the present embodiment, an example in which the marker L is attached to the floor surface, an upper surface or a side surface of a structure such as a pillar, or the like as shown in FIG. 1 will be described. In other embodiments, the marker L may be attached to other locations such as a wall, a shelf, and a ceiling.

The travel instruction unit 104 outputs a travel instruction D4 to the cart 2 (travel control device 20) to provide the instruction for the traveling position, the stop, the speed, or the like. For example, the travel instruction unit 104 instructs the cart 2 to correct the traveling position or the traveling direction (angle) of the cart 2 based on the amount of deviation detected by the detection unit 103.

The arm control unit 105 controls the arm 11 such that the vision sensor 12 or the tool 13 is at any position and in any orientation. As described above, in the present embodiment, the marker L is attached to the floor surface. Therefore, the arm control unit 105 controls the arm 11 such that the vision sensor 12 is in a first orientation in which the vision sensor 12 faces the floor surface (downward in a vertical direction) as shown in FIG. 1 while the cart 2 is moving.

### (Functional Configuration of Travel Control Device)

As shown in FIG. 2, the travel control device 20 includes a motor control unit 201.

The motor control unit 201 controls the drive device 21 to move, stop, or change the speed of the cart 2. When there is no guidance (travel instruction) provided by the robot 1, the motor control unit 201 controls the drive device 21 such that the cart 2 travels to the designated position based on a sensor value (the movement amount and the traveling direction of the cart 2) of the travel assistance sensor 22.

When the cart 2 is moved based only on the sensor value of the travel assistance sensor 22, there is a possibility that the traveling position and the traveling direction of the cart 2 deviate from the designated path due to the influence of the state of the floor surface (such as unevenness or inability to read the pattern) in a factory or the like. Therefore, in the present embodiment, the robot control device 10 of the robot 1 detects the amount of deviation of the cart 2 from the path from the marker L, and provides the travel instruction to the travel control device 20 of the cart 2 to correct the traveling position. The motor control unit 201 of the travel control device 20 controls the drive device 21 to adjust the traveling position of the cart 2 in accordance with the travel instruction of the robot control device 10.

As described above, the wheels 23 of the cart 2 in the present embodiment are Mecanum wheels. The motor control unit 201 may include a calculation unit 201A for calculating a control command value indicating the presence or absence of the rotation, the rotation direction, the rotation speed, and the like of the travel motor of each wheel 23. For example, the calculation unit 201A calculates, when the coordinates of the destination are given, the control command value of each travel motor for the cart 2 to move toward the coordinates of the destination. The motor control unit 201 controls the travel motor based on the control command value calculated by the calculation unit 201A.

### (Guidance Process of Cart by Robot)

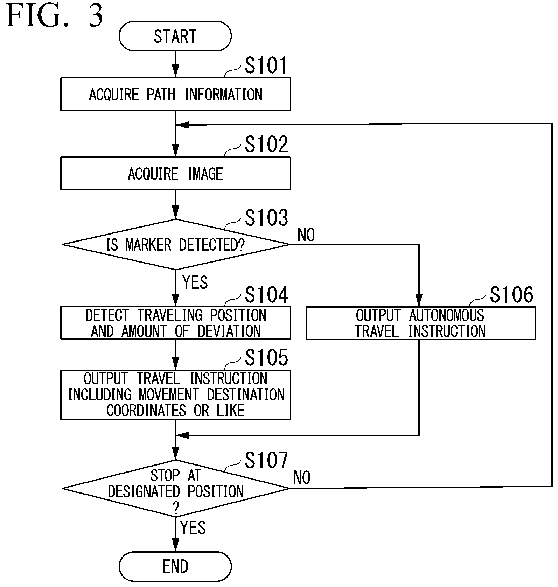

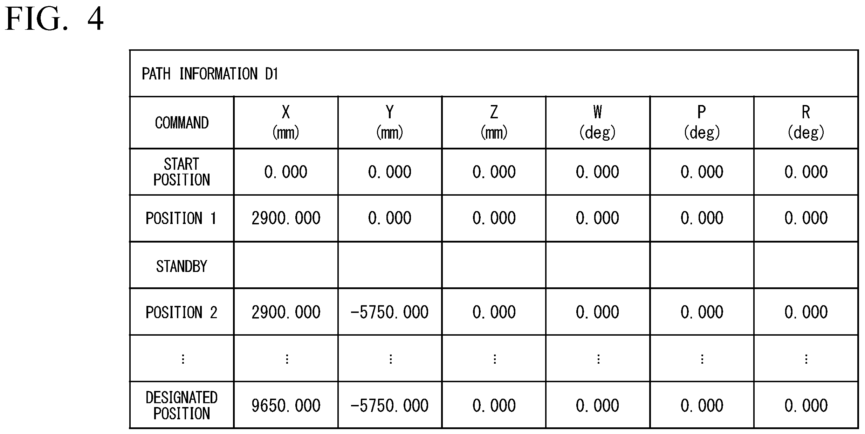

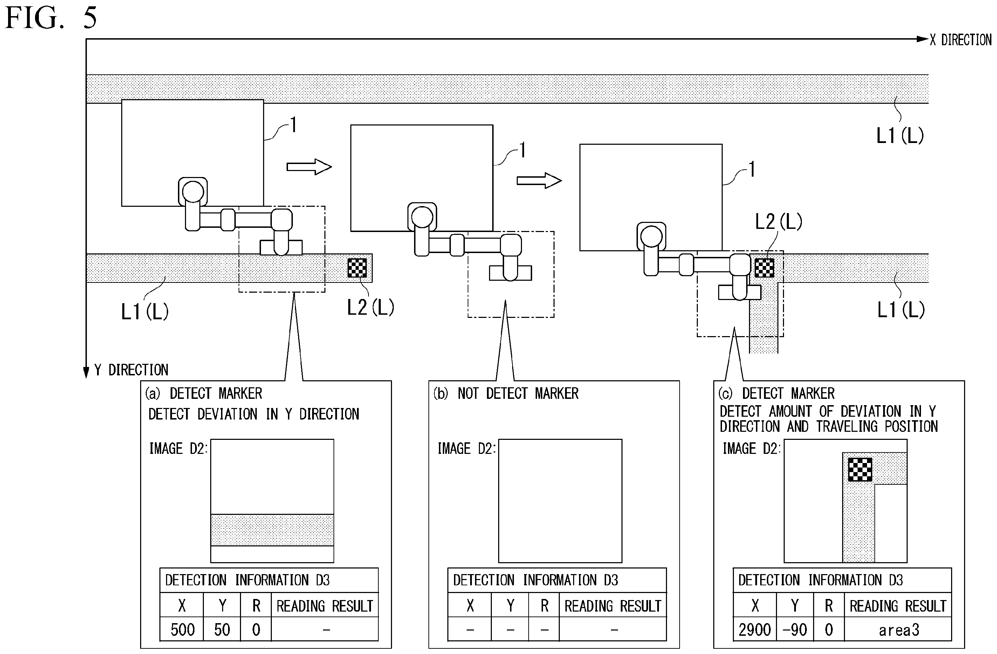

FIG. 3 is a flowchart showing an example of a guidance process of the cart by the robot according to the first embodiment. FIG. 4 is a diagram showing an example of the path information according to the first embodiment. FIG. 5 is a diagram showing the guidance process of the robot according to the first embodiment. Here, the flow of the guidance process of the cart 2 by the robot control device 10 of the robot 1 will be described with reference to FIGS. 3 to 5.

The path acquisition unit 101 acquires the path information D1 (FIG. 4) indicating the path from the current position of the cart 2 to the designated position from the operation PC 3 (step S101). The designated position is, for example, the work position of the robot 1. The designated position and the path are input by the operator via the operation PC 3. As shown in FIG. 4, the path information D1 is represented by the coordinates (X, Y, Z) of each of the start position (current position), the waypoint, and the designated position (destination), and the orientation (W, P, R) of the cart 2 at each position.

When the path information D1 is acquired, the robot control device 10 starts the guidance of the cart 2 in accordance with the path information D1. First, the robot 1 acquires the image D2 captured by the vision sensor 12 (step S102). As shown in FIGS. 1 and 5, in the present embodiment, the robot 1 captures the image D2 in the orientation (first orientation) in which the vision sensor 12 faces downward (floor surface) in the vertical direction.

Then, the detection unit 103 determines whether or not the marker L is detected from the acquired image D2 (step S103). When the marker L is detected (step S104; YES), the detection unit 103 detects the amount of deviation of the cart 2 from the traveling position or the path based on the detection information D3 of the marker L (step S104).

For example, as shown in (a) of FIG. 5, it is assumed that the guide line L1, which is the marker L, is detected from the image D2 (step S103; YES). Alternatively, as shown in (c) of FIG. 5, it is assumed that the QR code L2, which is the marker L, is detected from the image D2. In this case, the detection unit 103 detects the amount of deviation indicating the extent to which the detection position and the angle of the marker L deviate from a reference position and a reference angle, based on detection information D3 including the coordinates (X, Y) and the angle (angle R around the Z-axis) of the detection position of the marker L (L1, L2) in the image D2 (step S104). The reference position is the position and the angle at which the marker L should be detected when the cart 2 travels correctly along the path, and is provided to the robot 1 in advance.

In addition, for example, as shown in (c) of FIG. 5, it is assumed that the QR code L2, which is the marker L, is detected from the image D2 (step S103; YES). In this case, the detection unit 103 detects the amount of deviation of the cart 2 from the QR code L2 of the image D2, and detects the traveling position based on the reading result of the QR code L2 (step S104). For example, the QR code L2 records an area name indicating each of a plurality of work areas disposed in the work space. The detection unit 103 is provided with, in advance, map information in which the area name and the position (XY coordinates) of the work area are associated with each other, and detects the traveling position (X, Y) of the cart 2 based on the reading result of the QR code L2 and the map information. Further, the QR code L2 may include the travel instruction such as "stop", "90° turn", or "traveling speed".

Then, the travel instruction unit 104 outputs the travel instruction D4 to the cart 2 based on the detected amount of deviation and traveling position (step S105).

For example, as shown in (a) of FIG. 5, when the amount of deviation in the Y direction from the guide line L1 is detected, the travel instruction unit 104 outputs the travel instruction D4 for correcting the position of the cart 2 in the Y direction. This travel instruction is represented by, for example, relative coordinates (X, Y) of the corrected position with respect to the current position of the cart 2. When the cart 2 can change the traveling direction by the steering mechanism, a relative angle (R) of the corrected traveling direction with respect to the current traveling direction may be included in the travel instruction D4. The travel instruction unit 104 may output the travel instruction D4 for correcting the traveling position of the cart 2 when the amount of deviation is equal to or greater than a tolerance set in advance. That is, the position of the cart 2 may not be corrected when the amount of deviation is less than the tolerance.

In addition, as shown in (c) of FIG. 5, when the traveling position of the cart 2 is detected from the QR code L2, the travel instruction unit 104 outputs the travel instruction D4 such as coordinates indicating a next movement destination of the cart 2, a stop, or a speed change based on the traveling position of the cart 2 and the path information D1. For example, it is assumed that the path information D1 includes a path in which the cart 2 moves in the X direction, and then moves in the Y direction after reaching a certain work area (area 3). In this case, when the travel instruction unit 104 detects that the cart 2 has reached the work area (area 3), from the reading result of the QR code L2, the travel instruction unit 104 outputs the travel instruction D4 for designating the next movement destination coordinates to the cart 2. When the reading result of the QR code L2 includes information indicating "stop", "90° turn", or "traveling speed", the travel instruction unit 104 may include an instruction such as a stop, a 90° turn, or a change in traveling speed (acceleration or deceleration) in the travel instruction D4 in accordance with the reading result. In addition, when the cart 2 is stopped, the travel instruction unit 104 may detect the amount of deviation of the detection position of the QR code L2, output the travel instruction D4 for adjusting the position and the orientation of the cart 2, and output the travel instruction D4 indicating the stop after the position and the orientation of the cart 2 are adjusted.

On the other hand, as shown in (b) of FIG. 5, when the detection unit 103 does not detect the marker L from the image D2 (step S103; NO), the travel instruction unit 104 outputs the travel instruction D4 for instructing the cart 2 to autonomously travel (step S106).

Then, the robot control device 10 determines whether or not the cart 2 has stopped at the designated position (step S107). For example, when the instruction for the stop at the stop position of the designated position (within the work area serving as the destination) is provided in step S105 (step S107; YES), the robot control device 10 ends the guidance process of the cart 2. On the other hand, when the instruction for the stop at the stop position of the designated position is not provided in step S105 (step S107; NO), the robot control device 10 returns to step S102 and continues the guidance process of the cart 2 (steps S102 to S107).

### (Travel Control Process of Cart)

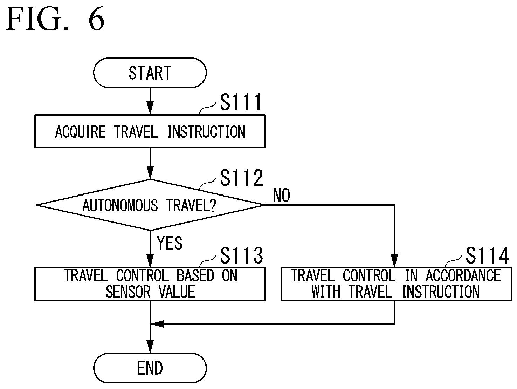

FIG. 6 is a flowchart showing an example of a travel control process of the cart according to the first embodiment. Here, a flow of the travel control process of the travel control device 20 of the cart 2 will be described with reference to FIG. 6.

First, the motor control unit 201 acquires the travel instruction D4 from the robot 1 (step S111).

Next, the motor control unit 201 determines whether or not the travel instruction D4 includes an instruction for the autonomous traveling (step S112).

When the travel instruction D4 includes the instruction for the autonomous traveling (step S112; YES), the motor control unit 201 controls the traveling of the cart 2 based on the sensor value of the travel assistance sensor 22 (step S113). The autonomous travel control based on the sensor value is a known technology, and thus detailed description thereof will be omitted.

On the other hand, when the travel instruction D4 does not include the instruction for the autonomous traveling (step S112; NO), the motor control unit 201 controls the traveling of the cart 2 in accordance with the content of the travel instruction D4 (step S114). For example, the calculation unit 201A of the motor control unit 201 calculates a control command value indicating the rotation direction or the rotation speed of the travel motor (drive device 21) of each wheel 23 based on the instruction regarding, for example, the movement destination coordinates, the turn, or the traveling speed included in the travel instruction D4. The motor control unit 201 controls the operation of each travel motor based on the calculated control command value. The travel control device 20 repeatedly executes the series of processes shown in FIG. 6 to cause the cart 2 to travel to the designated position.

### (Operations and Effects)

As described above, the robot 1 according to the present embodiment is the robot 1 mounted on the cart 2 that can autonomously travel by the drive device 21, and includes the arm 11 in which the vision sensor 12 is attached to the tip 11a and the position and the orientation of the tip 11a can be optionally changed, the detection unit 103 that detects the amount of deviation of the traveling position of the cart 2 with respect to the designated path based on the marker L included in the image D2 captured by the vision sensor 12, and the travel instruction unit 104 that instructs the cart 2 to correct the traveling position of the cart 2 based on the amount of deviation.

In this manner, by causing the robot 1 to guide the cart 2, it is possible to achieve both the configuration of the cart 2 with the minimum amount of equipment and cost and the accurate movement of the cart 2 along the path. Since the vision sensor 12 already provided in the robot 1 can be used, it is possible to suppress the cost required for adding hardware on the robot 1 side.

Further, the detection unit 103 detects the amount of deviation based on a difference between the position and the angle of the marker L included in the image D2 and the reference position and the reference angle.

In this manner, the robot 1 can accurately detect the deviation of the traveling position and the traveling orientation of the cart 2 based on the marker L. Therefore, the robot 1 can correct the traveling position or the traveling orientation of the cart 2 to be along the path.

In addition, the marker L is the QR code L2 (two-dimensional code), the detection unit 103 reads information indicating at least one of the traveling position, the stop, the turn, or the traveling speed from the QR code L2 included in the image D2, and the travel instruction unit 104 provides the cart with the instruction for at least one of the next movement destination, the stop, the turn, or the traveling speed based on the information read from the QR code L2.

In this manner, the robot 1 can easily detect the traveling position of the cart based on the information read from the QR code L2. Further, when the information on the stop, the turn, or the traveling speed is recorded in the QR code L2, the robot 1 can automatically control the traveling of the cart 2 based on the information, and thus it is possible to reduce the time and effort required for the operator to input detailed commands in advance.

In addition, when the marker L is not included in the image D2, the travel instruction unit 104 of the robot 1 instructs the cart 2 to autonomously travel to the designated point on the path, the cart 2 includes the travel assistance sensor 22 that can detect the movement amount and the traveling direction, and the travel control device that causes the cart 2 to autonomously travel based on the movement amount and the traveling direction detected by the travel assistance sensor 22 when the instruction for the autonomous traveling is received.

In this manner, the cart 2 can be caused to autonomously travel even in an area in which the marker L is not attached. In addition, by restarting the guidance of the robot 1 when the cart 2 has reached the area to which the marker L is attached, even when the traveling position of the cart 2 deviates from the path during the autonomous traveling, the traveling position can be corrected to the correct traveling position along the path.

### (Modification Example 1)

In the first embodiment, the example has been described in which the robot 1 performs imaging in the first orientation in which the vision sensor 12 faces the floor surface (downward in the vertical direction). In the present modification example, the robot 1 performs imaging in the second orientation in which the vision sensor 12 faces forward (horizontal direction) in the traveling direction, in addition to the first orientation.

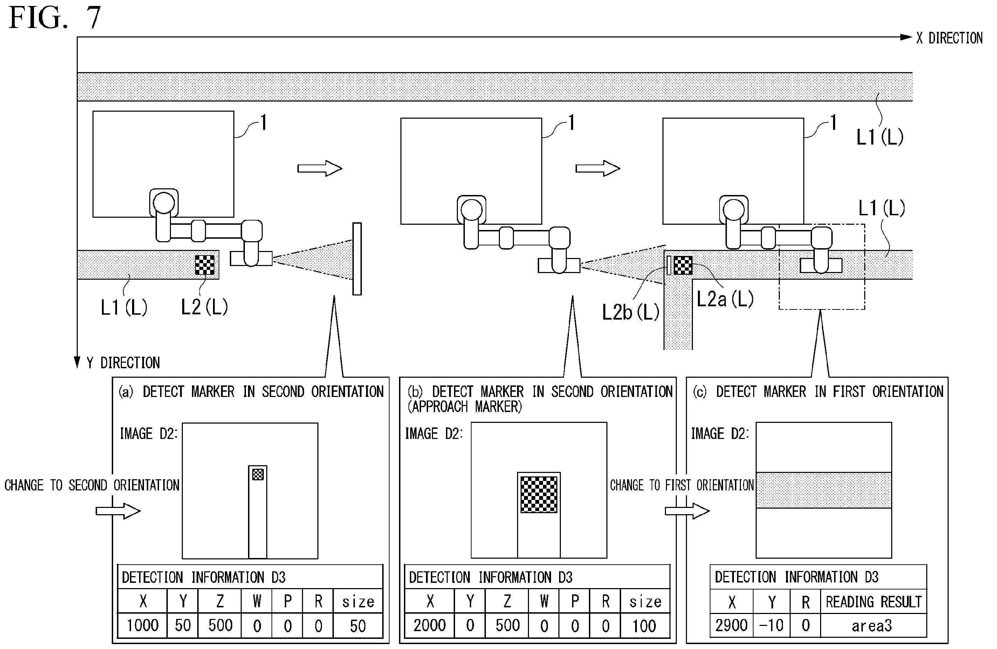

FIG. 7 is a diagram showing a guidance process of the robot according to the modification example of the first embodiment. For example, as shown in (a) of FIG. 7, when the detection unit 103 cannot detect the marker L in the first orientation, the arm control unit 105 changes the position and the orientation of the arm 11 to take the second orientation in which the vision sensor 12 faces forward in the traveling direction. As in the example of FIG. 1, the marker L includes a QR code L2a attached to the upper surface of the pillar, and a QR code L2b attached to the side surface. When the pillar to which such a QR code L2b is attached is provided forward in the traveling direction, the detection unit 103 can detect the QR code L2b from the image D2 in the second orientation. The pillar is installed on or near the guide line L1 attached to the floor surface.

When the detection unit 103 detects the QR code L2b in the second orientation (step S103 in FIG. 3; YES), the detection unit 103 detects the traveling position of the cart 2 or the amount of deviation from the path based on the detection information D3 of the QR code L2b (step S104 in FIG. 3). In addition, the detection information D3 includes the coordinates (X, Y, Z), the angles (W, P, R), and the detection size of the detection position of the QR code L2b, as in the example of FIG. 7. Further, the detection information D3 may include the reading result of the QR code L2b. In this manner, the robot control device 10 can switch to the second orientation to detect the QR code L2b at the front in the traveling direction and continue the guidance of the cart 2 in an area in which the marker L is not attached to the floor surface.

In addition, as shown in (b) of FIG. 7, when the detection size of the QR code L2b in the second orientation is equal to or greater than a predetermined size, that is, when the vision sensor 12 is sufficiently close to the pillar, the arm control unit 105 switches to the first orientation as shown in (c) of FIG. 7. As described above, since the pillar is installed on or near the marker L attached to the floor surface, the marker L attached to the floor surface can be immediately detected by returning to the first orientation after sufficiently approaching the pillar. In the first orientation, since a distance between the vision sensor 12 and the marker L is fixed, the detection accuracy of the amount of deviation in the detection unit 103 can be increased as compared with the second orientation. In this manner, the robot 1 can switch between the first orientation and the second orientation in accordance with the detection state of the marker L, thereby maintaining the detection accuracy of the amount of deviation in the first orientation in an area in which the first marker L2a is attached to the floor surface, and detecting the amount of deviation in the second orientation in an area in which the first marker L2a is not attached to the floor surface, and continuing the guidance of the cart 2. That is, since a period during which the cart 2 autonomously travels with low accuracy can be reduced, it is possible to more reliably cause the cart 2 to travel along the path.

### (Modification Example 2)

In the first embodiment, the example has been described in which the detection unit 103 detects the traveling position of the cart 2 or the like using the guide line L1 or the QR code L2 as the marker L. In the present modification example, the detection unit 103 detects the traveling position of the cart 2 or the like using the structure in the work area (an area including the path, the stop position, and the like of the cart 2) as the marker L. The structure is, for example, a shelf, a signboard, a product, a jig, or a portion of a building such as a wall or a pillar. In addition, in the present modification example, the robot 1 performs imaging in the second orientation in which the vision sensor 12 always faces forward (horizontal direction) in the traveling direction.

In step S103 of FIG. 3, the detection unit 103 detects the shape (three-dimensional shape or two-dimensional shape) of the structure from the image D2 captured by the vision sensor 12, and collates the shape and the position of each structure, which is the marker L, with the reference data recorded in advance, thereby determining whether or not the marker L is detected from the image D2.

Then, in step S104 of FIG. 3, the detection unit 103 detects the traveling position of the cart 2 based on the marker L (structure) detected from the image D2. Further, the detection unit 103 detects the amount of deviation of the cart 2 from the reference position based on the detection position of the marker L (structure) in the image D2. The detection unit 103 compares the shape of the marker L detected from the image D2 with the reference data (the three-dimensional shape of the marker L or the two-dimensional shape of the marker L as viewed from each direction) to detect the relative angle between the traveling direction of the cart 2 and the marker L, and detects the amount of deviation of the relative angle from the reference angle. The reference position and the reference angle are set in advance to the position and the relative angle at which the marker L should be detected when the cart 2 correctly travels along the path.

In step S105 of FIG. 3, the travel instruction unit 104 outputs the travel instruction D4 to the cart 2 based on the traveling position or the amount of deviation detected by the detection unit 103. In addition, when the reference data records the travel instruction (such as "stop", "90° turn", and "traveling speed") that should be executed when the marker L is detected, the travel instruction unit 104 may include the travel instruction read from the reference data in the travel instruction D4 to the cart 2.

In this manner, the robot 1 can detect the traveling position of the cart 2 or the amount of deviation from the path from the shape of the structure in the work area, and guide the cart 2 to travel along the path, even in an environment in which, for example, the white line L1 or the QR code L2 attached to the floor surface by the product, the jig, or the like is hidden. The robot 1 may be configured to switch between the function of the first embodiment or Modification Example 1 and the function of Modification Example 2 in accordance with the environment of the work area.

### <Second Embodiment>

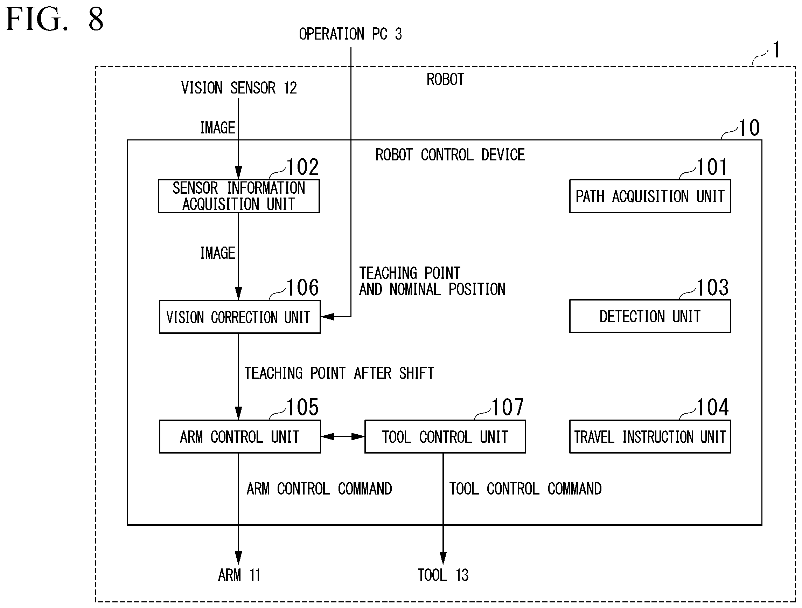

Hereinafter, a second embodiment will be described with reference to FIG. 8. Among the configurations of the second embodiment, the common configurations to the first embodiment are denoted by the same reference numerals, and descriptions thereof are omitted. The robot 1 moves to the work position (designated position), and then performs the work on the workpiece.

### (Functional Configuration of Robot Control Device)

FIG. 8 is a block diagram showing a functional configuration of a robot control device according to the second embodiment. As shown in FIG. 8, the robot control device 10 according to the present embodiment further includes a vision correction unit 106 and a tool control unit 107.

The vision correction unit 106 corrects a user coordinate system of the workpiece in accordance with the actual position and orientation of the workpiece, based on the image captured by the vision sensor 12.

The tool control unit 107 controls the tool 13 to perform the predetermined work corresponding to the tool 13 after the arm control unit 105 moves the tip 11a (tool 13) of the arm 11 to the work position of the workpiece. The predetermined work includes, for example, welding; assembly work such as screw tightening and drilling; pick operations such as gripping and moving components; finishing; ultrasonic inspection. The tool control unit 107 includes an application for controlling various tools 13. This application may be configured such that the application can be arbitrarily added or replaced when the tool 13 is changed.

The arm control unit 105 moves the tool 13 to the work position with respect to the workpiece, based on the user coordinate system after the correction by the vision correction unit 106.

### (Vision Correction Process)

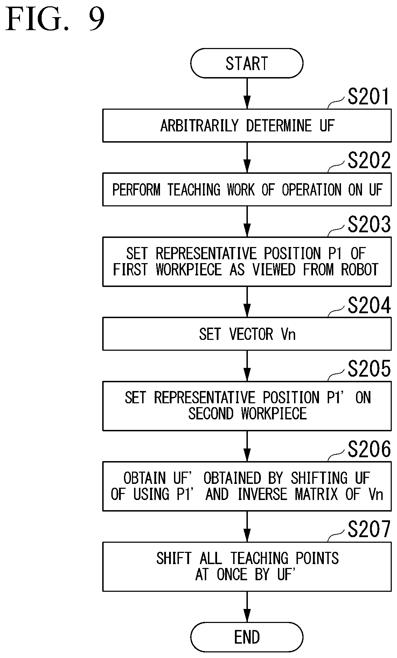

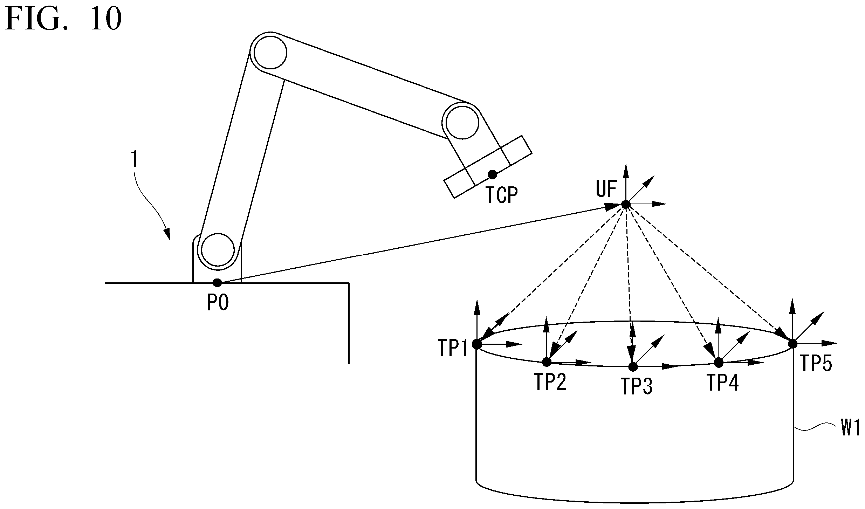

FIG. 9 is a flowchart showing an example of a vision correction process of the robot according to the second embodiment. FIGS. 10 to 14 are first to fourth diagrams showing the vision correction process of the robot according to the second embodiment. Hereinafter, a flow of the vision correction process of the robot control device 10 will be described with reference to FIGS. 9 to 14.

First, the operator arbitrarily determines a reference position UF (origin) of the user coordinate system representing the coordinates of the work target of the robot 1 (step S201). The vision correction unit 106 sets the position designated by the operator through the operation PC 3 as the reference position UF. The reference position UF is represented by vectors (X, Y, Z, W, P, R) indicating the position and the direction from the origin P0 of the robot 1.

Then, the operator performs teaching work of the operation on the UF (step S202). For example, as shown in FIG. 10, the vision sensor 12 of the robot 1 images the first workpiece W1. The operator designates the position at which the tool 13 performs the work while viewing the image. The vision correction unit 106 stores the designated position as a teaching point TP. In the example of FIG. 10, five positions are set as teaching points TP1 to TP5.

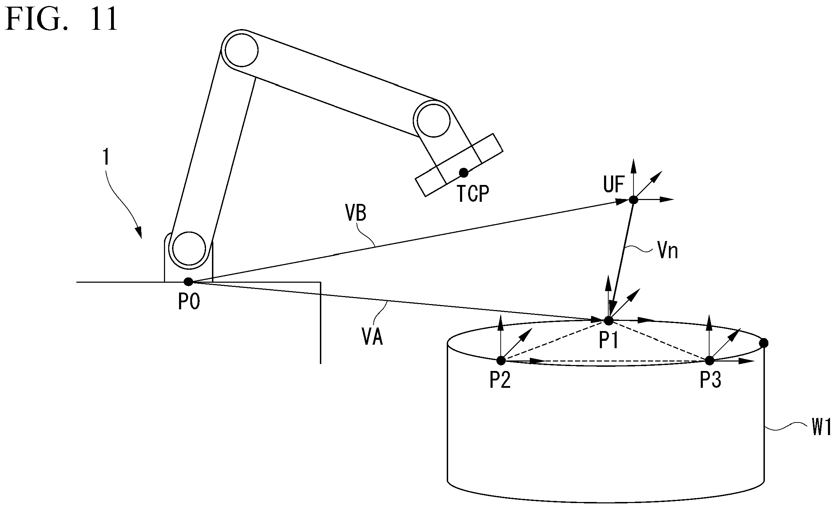

Further, the operator sets a representative position of the workpiece as viewed from the robot 1 (step S203). For example, the operator designates, as the representative position, any position P1 of the first workpiece W1. As the representative position, for example, a characteristic position of the first workpiece W1, such as the position at which a screw hole or a projection portion is present, is selected. The vision correction unit 106 sets, as the representative position, the position P1 designated by the operator. As in the example of FIG. 11, the operator may set a plurality of positions P1, P2, and P3. In this case, the vision correction unit 106 sets, as the representative position, an average position of the positions P1, P2, and P3. Here, for simplicity of description, an example will be described in which the representative position is P1.

Then, the vision correction unit 106 brings the reference position UF of the user coordinate system and the representative point of the workpiece as viewed from the robot into a known state. Specifically, as shown in FIG. 11, the vision correction unit 106 obtains a vector Vn from the representative position (for example, P1) to the reference position UF (step S204).

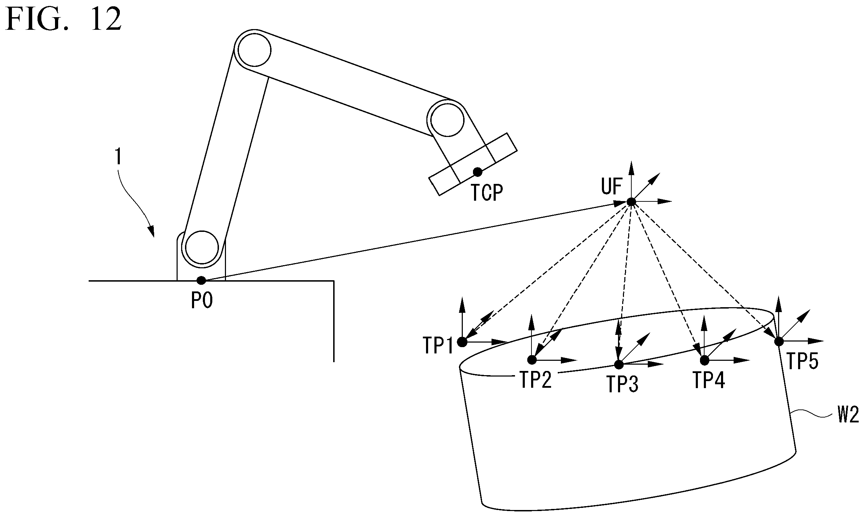

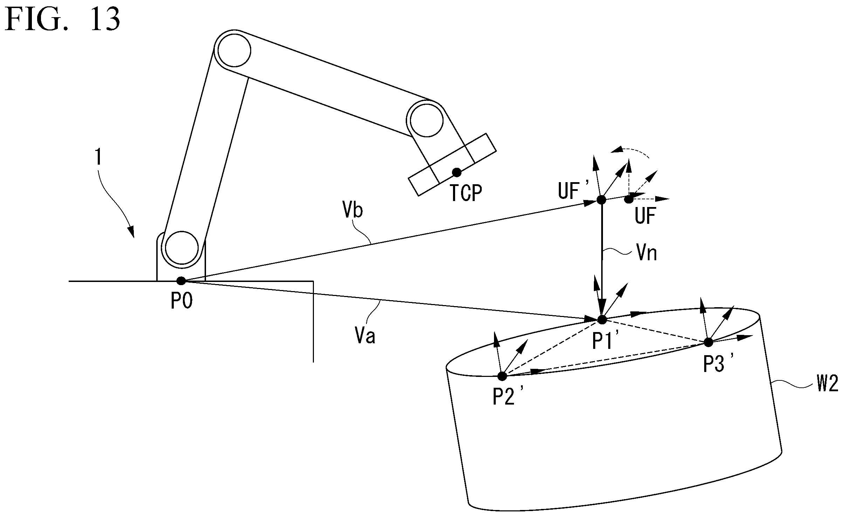

After setting the vector Vn, the second and subsequent workpieces (second workpiece W2) are installed, and the vision sensor 12 of the robot 1 images the workpiece. For example, as shown in FIG. 12, the position and the orientation of the second workpiece W2 may be different from the position and the orientation of the first workpiece W1. Then, as in the example of FIG. 12, the teaching points TP1 to TP5 set in the first workpiece W1 significantly deviate in the second workpiece W2. Therefore, the vision correction unit 106 according to the present embodiment corrects the user coordinate system in accordance with the position or the orientation of the second workpiece W2 for the work on the second workpiece W2 and subsequent workpieces. Specifically, first, as shown in FIG. 13, the operator designates the representative position P1' on the second workpiece W2 corresponding to the representative position P1 of the first workpiece W1 while viewing the captured image of the second workpiece W2 (step S205). The vision correction unit 106 sets the position designated by the operator as the representative position P1' of the second workpiece. When the operator designates the plurality of positions P1 to P3 of the first workpiece W1 in step S203, the operator also designates the plurality of positions P1' to P3' for the second workpiece W2. In this case, the vision correction unit 106 sets the average position of the positions P1' to P3' as the representative position of the second workpiece W2.

Then, the vision correction unit 106 obtains the corrected reference position UF' obtained by shifting the reference position UF of the user coordinate system by using the representative position P1' of the second workpiece W2 and the inverse matrix of the vector Vn (step S206). In order to obtain the corrected reference position UF', the vector Vb from the origin P0 to the corrected reference position UF' may be obtained from the vector Va from the origin P0 to the representative position P1' of the robot 1 and the inverse matrix of the vector Vn. The vectors Va and Vb are the vectors (X, Y, Z, W, P, R) indicating the position and the direction from the origin P0.

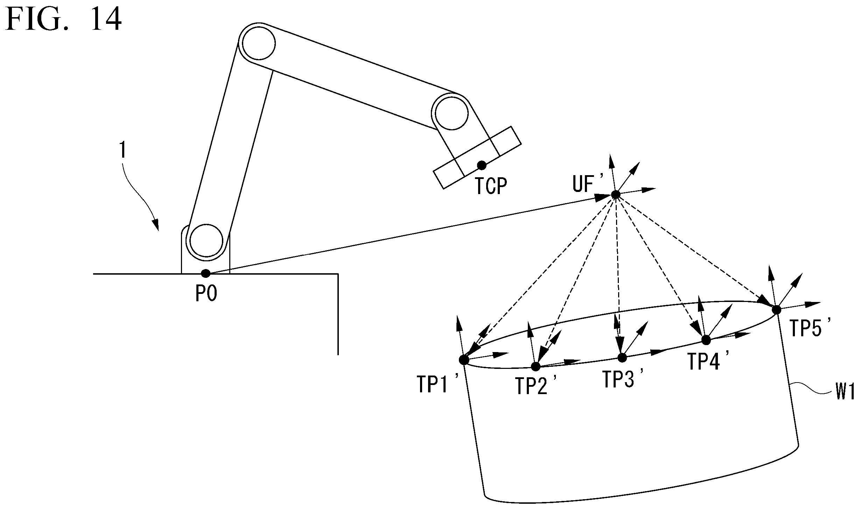

Further, as shown in FIG. 14, the vision correction unit 106 shifts all of the teaching points TP1 to TP5 designated in step S202 by the reference position UF' at once as work points TP1' to TP5' on the second workpiece W2 (step S207). After the work points TP1' to TP5' for the second workpiece W2 are obtained, the arm control unit 105 moves the tool center point TCP to each work point, in order. Then, the tool control unit 107 controls the operation of the tool 13 to perform the predetermined work on the second workpiece W2 each time the tool center point TCP reaches each work point. In addition, for the subsequent second workpiece W2, steps S205 to S207 of FIG. 9 are also performed to obtain the work points TP1' to TP5' for each second workpiece W2, and then the work is performed.

### (Operations and Effects)

As described above, the robot 1 according to the present embodiment further includes the vision correction unit 106 that corrects the user coordinate system of the workpiece in accordance with the actual position and orientation of the workpiece, based on the image captured by the vision sensor 12. Further, the arm control unit 105 controls the position and the orientation of the arm 11 such that the tool center point TCP attached to the tip 11a of the arm 11 moves to the work point in the corrected user coordinate system.

In this manner, the robot 1 can move the tool center point TCP to the correct work point even when the position or the orientation of the second workpiece W2 differs each time a new workpiece (second workpiece W2) is installed. Therefore, the accuracy of the work of the robot 1 can be improved. In addition, even when the position or the orientation of the cart 2 deviates from the work position at which the position or the orientation is designated, the robot 1 can perform the work by accurately moving the tool center point TCP to the work point on the second workpiece W2. Accordingly, in the guidance process of the cart 2 in the first embodiment, an error may be allowed for the position or the orientation of the cart 2 with respect to the work position. Since the process of finely adjusting the position or the orientation of the cart 2 at the work position can be omitted by allowing the error, the time required for the movement or the position adjustment of the robot 1 and the cart 2 can be shortened.

### <Hardware Configuration>

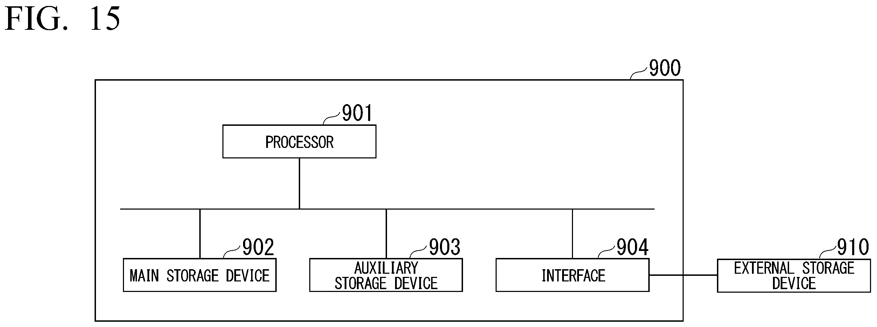

FIG. 15 is a diagram showing an example of a hardware configuration of the robot control device and the travel control device. A computer 900 includes a CPU 901, a main storage device 902, an auxiliary storage device 903, an input/output interface 904, and a communication interface 905.

Each of the robot control device 10 and the travel control device 20 is mounted on the computer 900. Each of the above functions is stored in the auxiliary storage device 903 in the form of a program. The CPU 901 reads out the program from the auxiliary storage device 903, loads the readout program into the main storage device 902, and executes the above processes in accordance with the program. In addition, the CPU 901 secures a storage region in the main storage device 902 in accordance with the program. Further, the CPU 901 secures a storage region for storing data being processed, in the auxiliary storage device 903 in accordance with the program.

A program for realizing all or some of the functions of the robot control device 10 and the travel control device 20 may be recorded on a computer-readable recording medium, and the program recorded on the recording medium may be read into a computer system and executed to perform the process by each functional unit. The term "computer system" includes an OS or hardware such as peripheral devices. Further, the term "computer system" also includes a homepage providing environment (or display environment) when a WWW system is used. Further, the term "computer-readable recording medium" refers to a portable medium such as a CD, a DVD, or a USB, or a storage device such as a hard disk built into a computer system. In addition, when the program is distributed to the computer 900 via a communication line, the computer 900 that receives the distribution may load the program into the main storage device 902 and execute the above-described process. In addition, the above program may be a program for realizing a part of the above functions, and the above functions may be realized in combination with a program already recorded in the computer system.

### <Other Embodiments>

Although the embodiments have been described in detail with reference to the accompanying drawings, the specific configuration is not limited to the above configurations, and various design changes and the like can be made. That is, in another embodiment, the order of the above processes may be changed as appropriate. Further, some of the processes may be executed in parallel.

### <Supplementary Note>

The robot, the autonomous robot system, the guidance method, the control method, and the program described in the above embodiments are understood as follows, for example.
(1) A first aspect relates to a robot 1 mounted on a cart 2 configured to autonomously travel, the robot 1 including: an arm 11 of which the position and the orientation of a tip are arbitrarily changeable; a vision sensor 12 attached to the tip of the arm 11; a detection unit 103 configured to detect the amount of deviation of the cart 2 relative to a designated path, based on a marker L included in an image captured by the vision sensor 12; and a travel instruction unit 104 configured to instruct the cart 2 to correct a traveling position or a traveling orientation of the cart 2, based on the amount of deviation.

In this manner, by causing the robot 1 to guide the cart 2, it is possible to achieve both the configuration of the cart 2 with a minimum amount of equipment and cost and the accurate movement of the cart 2 along the path. Since the vision sensor 12 already provided in the robot 1 can be used, it is possible to suppress the cost required for adding hardware on the robot 1 side.

(2) A second aspect relates to the robot 1 according to the first aspect, in which the detection unit 103 is configured to detect the amount of deviation based on a difference between the position and the angle of the marker L included in the image and a reference position and a reference angle.

In this manner, the robot 1 can accurately detect the deviation of the traveling position and the traveling orientation of the cart 2 based on the marker L. Therefore, the robot 1 can correct the traveling position or the traveling orientation of the cart 2 to be along the path.

(3) A third aspect relates to the robot 1 according to the first or second aspect, in which the marker L is a two-dimensional code L2, the detection unit 103 is configured to read information indicating at least one of the traveling position, a stop, a turn, and a traveling speed from the two-dimensional code L2 included in the image, and the travel instruction unit 104 is configured to provide the cart 2 with an instruction for at least one of a next destination, the stop, the turn, and the traveling speed, based on the information read from the two-dimensional code L2.

In this manner, the robot 1 can easily detect the traveling position of the cart based on the information read from the two-dimensional code L2. When the information on the stop, the turn, and the traveling speed is recorded in the two-dimensional code L2, the robot 1 can automatically control the traveling of the cart 2 based on the information, and thus it is possible to reduce the time and effort required for the operator to input detailed commands in advance.

(4) A fourth aspect relates to the robot 1 according to the first or second aspect, in which the marker L is a structure within a work area of the cart 2, the detection unit 103 is configured to compare reference data in which a shape of the structure and information indicating at least one of the traveling position, a stop, a turn, and a traveling speed are recorded with a shape detected from the image D2 to detect at least one of pieces of the information, and the travel instruction unit 104 is configured to provide the cart 2 with an instruction for at least one of a next destination, the stop, the turn, and the traveling speed, based on the detected information.

In this manner, the robot 1 can detect the traveling position or the necessity of the stop of the cart 2 from the shape of the structure in the work area and appropriately guide the cart 2 even in an environment in which, for example, the white line L1 or the QR code L2 attached to the floor surface by the product, the jig, or the like is hidden.

(5) A fifth aspect relates to the robot 1 according to any one of the first to third aspects, further including: an arm control unit 105 configured to control the position and the orientation of the tip of the arm 11, in which the marker L includes a first marker L2a attached to face in a vertical direction, and a second marker L2b attached to face in a horizontal direction, and the arm control unit 105 is configured to control the arm 11, when the cart 2 is traveling, such that the vision sensor 12 is in a first orientation in which the vision sensor faces in the vertical direction and is capable of imaging the first marker L2a, and control the arm 11, when the cart 2 is traveling and the first marker L2a is not included in the image captured in the first orientation, such that the vision sensor 12 is in a second orientation in which the vision sensor 12 faces in the horizontal direction and is capable of imaging the second marker L2b.

In this manner, the robot 1 can switch to the second orientation and detect the amount of deviation from the second marker L2b even in an area in which the first marker L2a is not present on the floor surface, and thus it is possible to continue to guide the cart 2. That is, it is possible to reduce a period during which the cart 2 autonomously travel with low accuracy.

(6) A sixth aspect relates to the robot 1 according to the fifth aspect, in which the detection unit 103 is configured to further detect a size of the second marker L2b when the arm is in the second orientation, and the arm control unit 105 is configured to switch the arm 11 from the second orientation to the first orientation when the detected size of the second marker L2b is equal to or greater than a predetermined size.

In this manner, the robot 1 can maintain high detection accuracy of the first marker L2a in the first orientation in an area in which the first marker L2a is attached to the floor surface. In this manner, it is possible to more reliably cause the cart 2 to travel along the path.

(7) A seventh aspect relates to the robot 1 according to any one of the first to sixth aspects, further including: a vision correction unit 106 configured to correct a user coordinate system of a workpiece in accordance with an actual position and orientation of the workpiece, based on the image captured by the vision sensor 12; and an arm control unit 105 configured to control the position and the orientation of the arm 11 such that a center point of a tool attached to the tip of the arm 11 moves to a work point in the corrected user coordinate system.

In this manner, the robot 1 can move the tool center point TCP to the correct work point even when the position or the orientation of the second workpiece W2 differs each time a new workpiece (second workpiece W2) is installed. Therefore, the accuracy of the work of the robot 1 can be improved. In addition, even when the position or the orientation of the cart 2 deviates from the work position at which the position or the orientation is designated, the robot 1 can perform the work by accurately moving the tool center point TCP to the work point on the second workpiece W2. Accordingly, in the guidance process of the cart 2 in the first embodiment, an error may be allowed for the position or the orientation of the cart 2 with respect to the work position. Since the process of finely adjusting the position or the orientation of the cart 2 at the work position can be omitted by allowing the error, the time required for the movement or the position adjustment of the robot 1 and the cart 2 can be shortened.

(8) An eighth aspect relates to a robot 1 configured to automatically perform predetermined work on a workpiece, the robot 1 including: an arm 11 of which the position and the orientation of a tip are arbitrarily changeable; a vision sensor 12 attached to the tip of the arm 11; a tool attached to the tip of the arm 11; a vision correction unit configured to correct a user coordinate system of the workpiece in accordance with an actual position and orientation of the workpiece, based on an image captured by the vision sensor 12; and an arm control unit 105 configured to control the position and the orientation of the arm 11 such that a center point of the tool attached to the tip of the arm 11 moves to a work point in the corrected user coordinate system.

In this manner, the robot 1 can move the tool center point TCP to the correct work point even when the position or the orientation of the second workpiece W2 differs each time a new workpiece (second workpiece W2) is installed. As a result, it is possible to improve the accuracy of the work of the robot 1. In addition, even when the position or the orientation of the cart 2 deviates from the work position at which the position or the orientation is designated, the robot 1 can perform the work by accurately moving the tool center point TCP to the work point on the second workpiece W2. Therefore, in the guidance process of the cart 2 according to the first embodiment, an error may be allowed for the position or the orientation of the cart 2 with respect to the work position. Since the process of finely adjusting the position or the orientation of the cart 2 at the work position can be omitted by allowing the error, the time required for the movement or the position adjustment of the robot 1 and the cart 2 can be shortened.

(9) A ninth aspect relates to an autonomous robot system 100 including: a cart 2; and the robot 1 according to any one of the first to eighth aspects, in which the travel instruction unit 104 of the robot 1 is configured to provide the cart 2 with an instruction for autonomous traveling, when the marker L is not included in the image, and the cart 2 includes a travel assistance sensor 22 configured to detect the movement amount and a traveling direction, and a travel control device 20 configured to cause the cart 2 to autonomously travel based on the movement amount and the traveling direction detected by the travel assistance sensor 22, when the instruction for the autonomous traveling is received.

In this manner, the cart 2 can be caused to autonomously travel even in an area in which the marker L is not attached. In addition, by restarting the guidance of the robot 1 when the cart 2 has reached the area to which the marker L is attached, even when the traveling position of the cart 2 deviates from the path during the autonomous traveling, the traveling position can be corrected to the correct traveling position along the path.

(10) A tenth aspect relates to a guidance method of a cart 2 configured to autonomously travel, using a robot 1 mounted on the cart 2 and including an arm 11 of which the position and the orientation of a tip are arbitrarily changeable, and a vision sensor 12 attached to the tip of the arm 11, the guidance method including: a step of detecting the amount of deviation of the cart 2 relative to a designated path, based on a marker L included in an image captured by the vision sensor 12; and a step of instructing the cart 2 to correct a traveling position or a traveling orientation of the cart 2, based on the amount of deviation.

(11) An eleventh aspect relates to a program causing a robot 1 mounted on a cart 2 and including an arm 11 of which the position and the orientation of a tip are arbitrarily changeable, and a vision sensor 12 attached to the tip of the arm 11, to execute: a step of detecting the amount of deviation of the cart 2 relative to a designated path, based on a marker L included in an image captured by the vision sensor 12 attached to the tip of the arm 11 of the robot 1; and a step of instructing the cart 2 to correct a traveling position or a traveling orientation of the cart 2, based on the amount of deviation.

(12) A twelfth aspect relates to a control method of a robot 1 including an arm 11 of which the position and the orientation of a tip are arbitrarily changeable, and a vision sensor 12 and a tool attached to the tip of the arm 11 and configured to perform predetermined work on a workpiece, the control method including: a step of correcting a user coordinate system of the workpiece in accordance with an actual position and orientation of the workpiece, based on an image captured by the vision sensor 12; and a step of controlling the position and the orientation of the arm 11 such that a center point of the tool moves to a work point in the corrected user coordinate system.

(13) A thirteenth aspect relates to a program causing a robot 1 including an arm 11 of which the position and the orientation of a tip are arbitrarily changeable, and a vision sensor 12 and a tool attached to the tip of the arm 11 and configured to perform predetermined work on a workpiece, to execute: a step of correcting a user coordinate system of the workpiece in accordance with an actual position and orientation of the workpiece, based on an image captured by the vision sensor 12 attached to the tip of the arm 11 of the robot 1; and a step of controlling the position and the orientation of the arm 11 such that a center point of the tool attached to the tip of the arm 11 moves to a work point in the corrected user coordinate system.

### INDUSTRIAL APPLICABILITY

According to the above aspects, by causing the robot mounted on the cart to perform the guidance, the cart can be configured with minimal equipment and cost while being able to travel accurately along the path.

Further, according to the above aspects, even when the robot slightly deviates from the work position, the tool can be accurately moved to the work point on the workpiece to perform the work.

### REFERENCE SIGNS LIST

100 Autonomous robot system
1 Robot
10 Robot control device
101 Path acquisition unit
102 Sensor information acquisition unit
103 Detection unit
104 Travel instruction unit
105 Arm control unit
106 Vision correction unit
107 Tool control unit
11 Arm
12 Vision sensor
12A CCD camera
12B 3D camera
13 Tool
2 Cart
20 Travel control device
201 Motor control unit
201A Calculation unit
21 Drive device
22 Travel assistance sensor
22A Position detection sensor
22B Gyrocompass
23 Wheel
24 Stopper
3 Operation PC
L Marker
L1 Guide line (marker)
L2 QR code (two-dimensional code, marker)
L2a QR code (first marker)
L2b QR code (second marker)

## Claims

1. A robot mounted on a cart configured to autonomously travel, the robot comprising:
an arm of which a position and an orientation of a tip are arbitrarily changeable;
a vision sensor attached to the tip of the arm;
a detection unit configured to detect an amount of deviation of the cart relative to a designated path, based on a marker included in an image captured by the vision sensor; and
a travel instruction unit configured to instruct the cart to correct a traveling position or a traveling orientation of the cart, based on the amount of deviation.

2. The robot according to Claim 1,
wherein the detection unit is configured to detect the amount of deviation based on a difference between a position and an angle of the marker included in the image and a reference position and a reference angle.

3. The robot according to Claim 1 or 2,
wherein the marker is a two-dimensional code,
the detection unit is configured to read information indicating at least one of the traveling position, a stop, a turn, and a traveling speed from the two-dimensional code included in the image, and
the travel instruction unit is configured to provide the cart with an instruction for at least one of a next destination, the stop, the turn, and the traveling speed, based on the information read from the two-dimensional code.

4. The robot according to Claim 1 or 2,
wherein the marker is a structure within a work area of the cart,
the detection unit is configured to compare reference data in which a shape of the structure and information indicating at least one of the traveling position, a stop, a turn, and a traveling speed are recorded with a shape detected from the image to detect at least one of pieces of the information, and
the travel instruction unit is configured to provide the cart with an instruction for at least one of a next destination, the stop, the turn, and the traveling speed, based on the detected information.

5. The robot according to Claim 1 or 2, further comprising:
an arm control unit configured to control the position and the orientation of the tip of the arm,
wherein the marker includes a first marker attached to face in a vertical direction, and a second marker attached to face in a horizontal direction, and
the arm control unit is configured to
control the arm, when the cart is traveling, such that the vision sensor is in a first orientation in which the vision sensor faces in the vertical direction and is capable of imaging the first marker, and
control the arm, when the cart is traveling and the first marker is not included in the image captured in the first orientation, such that the vision sensor is in a second orientation in which the vision sensor faces in the horizontal direction and is capable of imaging the second marker.

6. The robot according to Claim 5,
wherein the detection unit is configured to further detect a size of the second marker when the arm is in the second orientation, and
the arm control unit is configured to switch the arm from the second orientation to the first orientation when the detected size of the second marker is equal to or greater than a predetermined size.

7. The robot according to Claim 1 or 2, further comprising:
a vision correction unit configured to correct a user coordinate system of a workpiece in accordance with an actual position and orientation of the workpiece, based on the image captured by the vision sensor; and
an arm control unit configured to control a position and an orientation of the arm such that a center point of a tool attached to the tip of the arm moves to a work point in the corrected user coordinate system.

8. A robot configured to automatically perform predetermined work on a workpiece, the robot comprising:
an arm of which a position and an orientation of a tip are arbitrarily changeable;
a vision sensor attached to the tip of the arm;
a tool attached to the tip of the arm;
a vision correction unit configured to correct a user coordinate system of the workpiece in accordance with an actual position and orientation of the workpiece, based on an image captured by the vision sensor; and
an arm control unit configured to control a position and an orientation of the arm such that a center point of the tool attached to the tip of the arm moves to a work point in the corrected user coordinate system.

9. An autonomous robot system comprising:
a cart; and
the robot according to Claim 1 or 2,
wherein the travel instruction unit of the robot is configured to provide the cart with an instruction for autonomous traveling, when the marker is not included in the image, and
the cart includes
a travel assistance sensor configured to detect a movement amount and a traveling direction, and
a travel control device configured to cause the cart to autonomously travel based on the movement amount and the traveling direction detected by the travel assistance sensor, when the instruction for the autonomous traveling is received.

10. A guidance method of a cart configured to autonomously travel, using a robot mounted on the cart and including an arm of which a position and an orientation of a tip are arbitrarily changeable, and a vision sensor attached to the tip of the arm, the guidance method comprising:
a step of detecting an amount of deviation of the cart relative to a designated path, based on a marker included in an image captured by the vision sensor; and
a step of instructing the cart to correct a traveling position or a traveling orientation of the cart, based on the amount of deviation.

11. A program causing a robot mounted on a cart configured to autonomously travel, and including an arm of which a position and an orientation of a tip are arbitrarily changeable, and a vision sensor attached to the tip of the arm, to execute:
a step of detecting an amount of deviation of the cart relative to a designated path, based on a marker included in an image captured by the vision sensor attached to the tip of the arm of the robot; and
a step of instructing the cart to correct a traveling position or a traveling orientation of the cart, based on the amount of deviation.

12. A control method of a robot including an arm of which a position and an orientation of a tip are arbitrarily changeable, and a vision sensor and a tool attached to the tip of the arm and configured to perform predetermined work on a workpiece, the control method comprising:
a step of correcting a user coordinate system of the workpiece in accordance with an actual position and orientation of the workpiece, based on an image captured by the vision sensor; and
a step of controlling a position and an orientation of the arm such that a center point of the tool moves to a work point in the corrected user coordinate system.

13. A program causing a robot including an arm of which a position and an orientation of a tip are arbitrarily changeable, and a vision sensor and a tool attached to the tip of the arm and configured to perform predetermined work on a workpiece, to execute:
a step of correcting a user coordinate system of the workpiece in accordance with an actual position and orientation of the workpiece, based on an image captured by the vision sensor attached to the tip of the arm of the robot; and
a step of controlling a position and an orientation of the arm such that a center point of the tool attached to the tip of the arm moves to a work point in the corrected user coordinate system.
